# EUROPEAN PATENT APPLICATION

(11) **EP 4 620 750 A1**
(43) Date of publication of application: **24.09.2025**
(21) Application number: 25161849.2
(22) Date of filing: 05.03.2025
(51) Int. Cl.: B60S 1/38, B60S 1/52

(54) **WIPER BLADE**

(30) Priority: 18.03.2024 JP 2024042641
(71) Applicant: Mitsuba Corporation, Kiryu-shi, Gunma 376-8555 (JP)
(72) Inventor: SATO, Naoto, Kiryu-shi, Gunma, 3768555 (JP)
(74) Representative: Becker Kurig & Partner Patentanwälte mbB

(57) **Abstract**

The wiper blade includes a washer unit (50) mounted on a second long side wall portion (42) of a connecting member (40) and spraying a washer fluid toward a surface of a windshield glass (11). The washer unit includes a cover member (60) disposed facing the second long side wall portion, a valve member (70) disposed between the second long side wall portion and the cover member, and a flow path between the cover member and the valve member, through which the washer fluid flows. The valve member includes a hollow check valve (72) disposed on the upstream side of the flow path and being elastically deformable. The check valve has a slit (SL) opened against the restoring force of the check valve when the internal pressure of the check valve increases, and closed by the restoring force when the internal pressure of the check valve decreases.

## Description

### Technical Field

The disclosure relates to a wiper blade for wiping a wiping surface.

### Description of Related Art

Vehicles such as automobiles are equipped with a wiper device that wipes off rainwater or the like adhering to the surface (wiping surface) of the windshield glass. The wiper device includes a wiper blade that is slidably in contact with the wiping surface, and the wiper blade is mounted on the tip portion of a wiper arm that is oscillated by a drive shaft. Thus, by rotating the drive shaft forward and backward with a wiper motor, the wiper blade wipes off rainwater and dust adhering to the wiping surface.

For example, Patent Literature 1 describes a wiper blade that includes a pair of secondary levers gripping a blade rubber, a primary lever supporting the pair of secondary levers, a center cover portion mounted on the primary lever, and a washer nozzle mounted on the center cover portion.

Further, a check valve is accommodated within a nozzle body that forms the washer nozzle. The check valve has a valve body that opens and closes the flow path, and a coil spring that presses the valve body in a direction to close the flow path. The valve body is moved against the spring force of the coil spring to open the flow path when a cleaning fluid is pumped from a washer pump, and is moved by the spring force of the coil spring to close the flow path when the supply of the cleaning fluid is stopped.

### Related Art

### Patent Literature

[Patent Literature 1] Japanese Patent Application Laid-Open No. 2007-030565

### SUMMARY

### Problems to be Solved by the Invention

According to the technology described in Patent Literature 1, it is necessary to operably accommodate the check valve, composed of the valve body and the coil spring, within the nozzle body. Therefore, there has been a problem that the structure of the washer nozzle is complicated, making it difficult to carry out the assembly work and resulting in a large size of the washer nozzle.

The purpose of the disclosure is to provide a wiper blade that is capable of simplifying the structure of the check valve to improve assembly workability thereof and achieve miniaturization of the washer unit.

### Means for Solving the Problems

One aspect of the wiper blade is a wiper blade mounted on a wiper arm oscillated by a drive shaft and wiping a wiping surface. The wiper blade includes: a connecting member rotatably mounted on the wiper arm; a blade rubber mounted on the connecting member and being slidably in contact with the wiping surface; and a washer unit mounted on a side wall portion on at least one side of the connecting member in a wiping direction of the blade rubber, and spraying a cleaning fluid toward the wiping surface. The washer unit includes: a first mounting member disposed facing the side wall portion; a second mounting member disposed between the side wall portion and the first mounting member; and a flow path which is disposed between the first mounting member and the second mounting member and through which the cleaning fluid flows. The second mounting member includes a check valve which is disposed on an upstream side of the flow path, and which is hollow and elastically deformable. The check valve has a slit. The slit is opened against a restoring force of the check valve when an internal pressure of the check valve increases, and is closed by the restoring force of the check valve when the internal pressure of the check valve decreases.

### Effects of the Invention

According to the disclosure, it is possible to realize a wiper blade that is capable of simplifying the structure of the check valve to improve assembly workability thereof and achieve miniaturization of the washer unit.

### BRIEF DESCRIPTION OF THE DRAWINGS

FIG. 1 is a perspective view of the wiper device installed on a vehicle.
FIG. 2 is a view of arrow A of FIG. 1.
FIG. 3 is an enlarged perspective view of the washer unit.
FIG. 4 is a cross-sectional view showing the interior of the washer unit.
FIG. 5A to FIG. 5C are views showing details of the connecting member.
FIG. 6 is a perspective view showing the inside of the cover member.
FIG. 7A to FIG. 7C are views showing details of the valve member.
FIG. 8A and FIG. 8B are perspective views showing details of the piping connection member.
FIG. 9A and FIG. 9B are enlarged views of the dashed circle B part of FIG. 4, showing the operation of the valve body.
FIG. 10 is an exploded perspective view of the washer unit.
FIG. 11 is a view showing the assembly procedure of the nozzle assembly.
FIG. 12 is a perspective view of the nozzle assembly as seen from the valve member side.
FIG. 13 is a view showing the mounting procedure of the nozzle assembly to the connecting member.
FIG. 14 is a cross-sectional view showing the fixing portion of the nozzle assembly and the connecting member.
FIG. 15 is a perspective view showing the assembly procedure of the piping connection member to the nozzle assembly.
FIG. 16 is a cross-sectional view showing the assembly procedure of the piping connection member to the nozzle assembly.
FIG. 17A and FIG. 17B are perspective views showing a modified example of the valve member.
FIG. 18 is a perspective view showing a modified example including the washer units on the forward path side and the backward path side of the connecting member.

### DESCRIPTION OF THE EMBODIMENTS

Hereinafter, an embodiment of the disclosure will be described in detail using the figures.

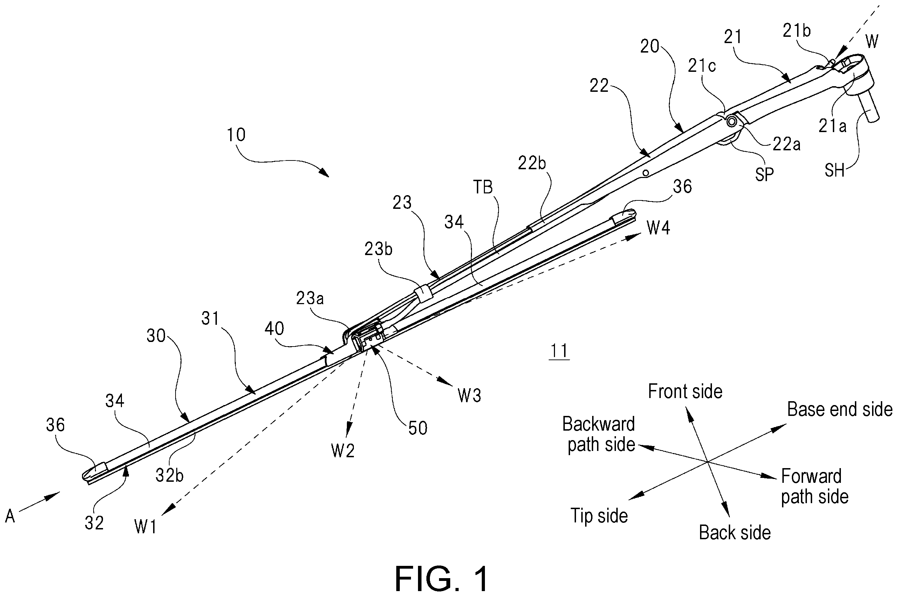

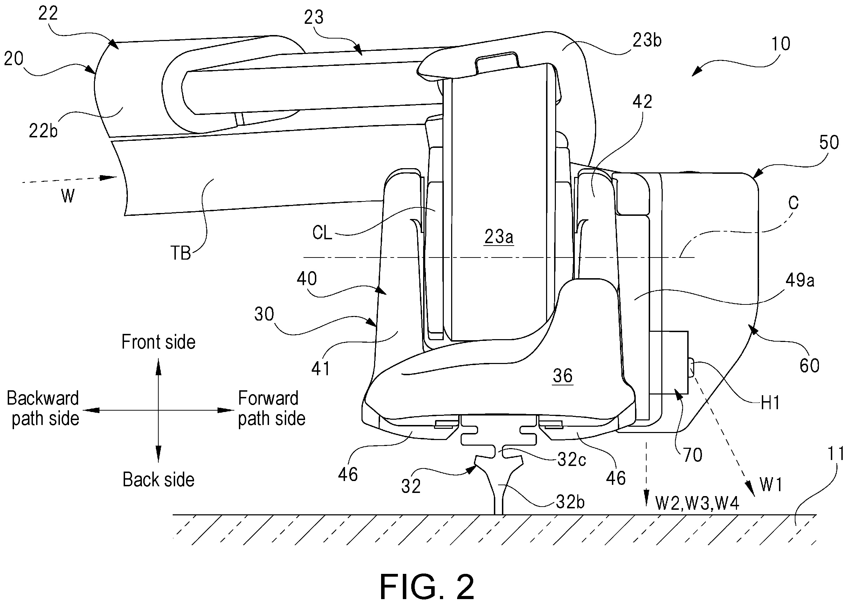

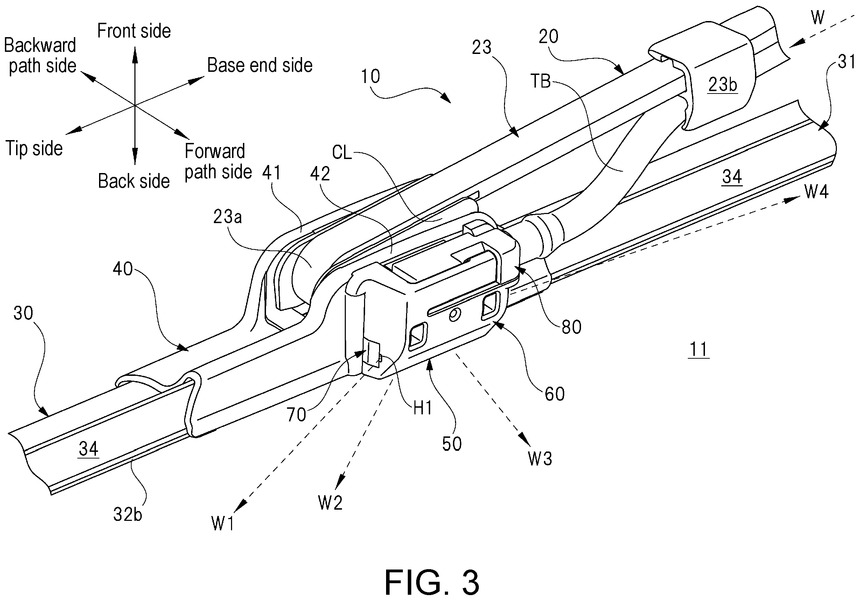

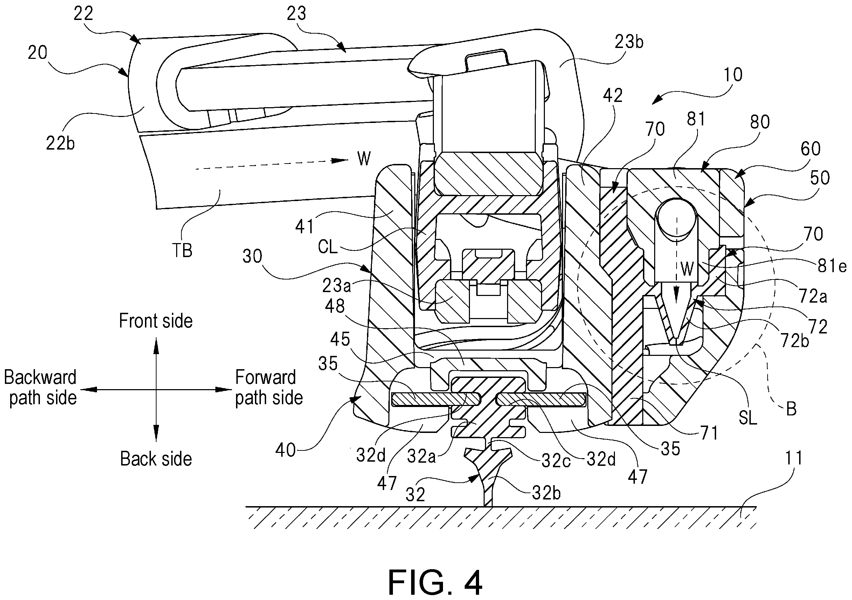

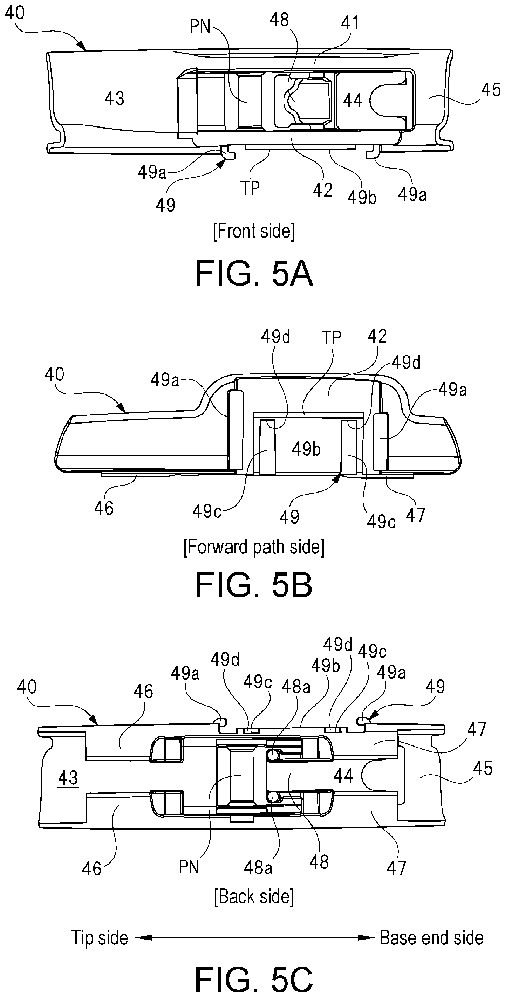

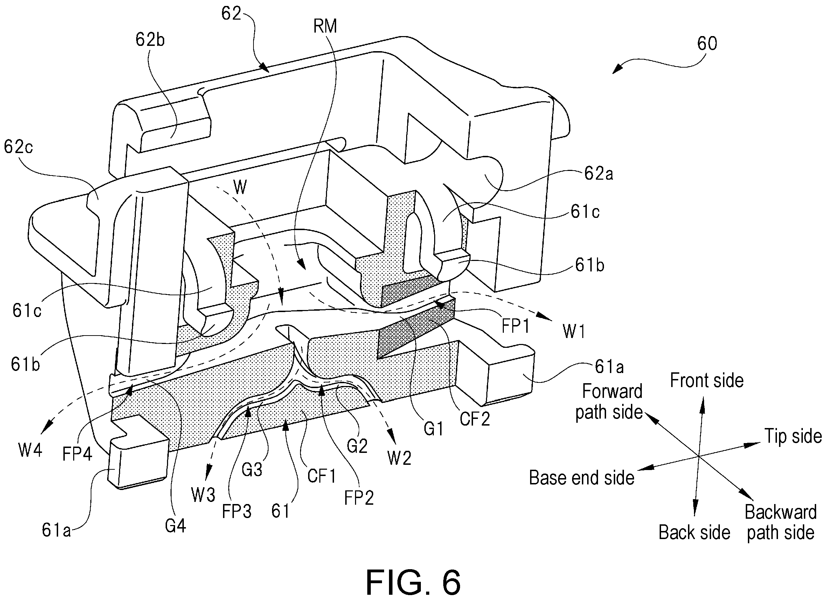

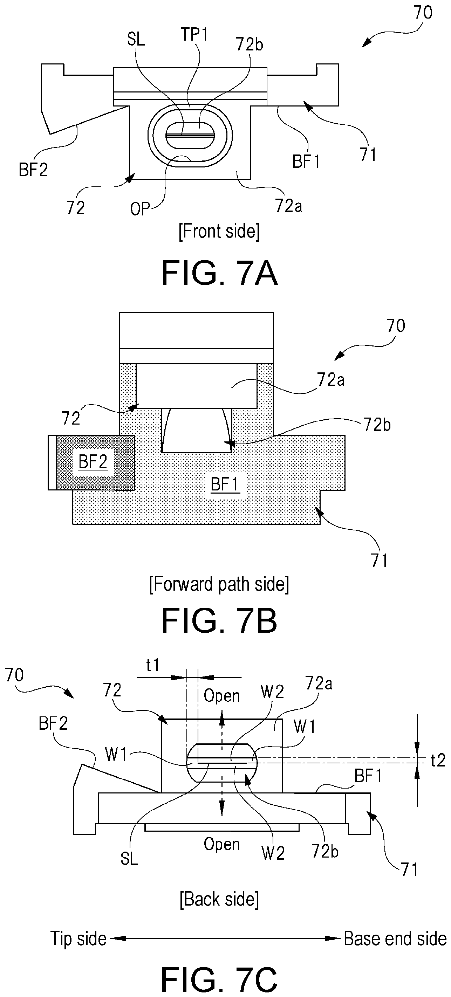

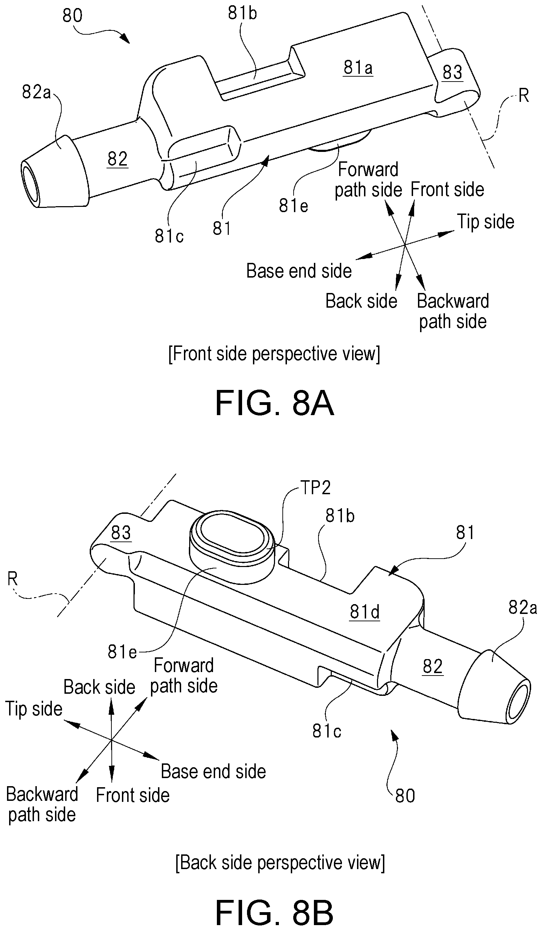

FIG. 1 shows a perspective view of the wiper device installed on a vehicle, FIG. 2 shows a view of arrow A of FIG. 1, FIG. 3 shows an enlarged perspective view of the washer unit, FIG. 4 shows a cross-sectional view showing the interior of the washer unit, FIG. 5A to FIG. 5C show views showing details of the connecting member, FIG. 6 shows a perspective view showing the inside of the cover member, FIG. 7A to FIG. 7C show views showing details of the valve member, and FIG. 8A and FIG. 8B show perspective views showing details of the piping connection member.

### [Wiper Device]

As shown in FIG. 1 to FIG. 4, a wiper device 10 is a device for wiping the surface of a windshield glass 11 provided at the front of a vehicle such as an automobile (not shown). Typically, a pair of wiper devices 10 are provided at the front of the vehicle, one on the driver's side and one on the passenger's side, and both have similar structures. Therefore, only one wiper device 10 will be shown below, and the detailed structure thereof will be described.

The wiper device 10 includes a wiper arm 20 and a wiper blade 30. The wiper blade 30 is rotatably mounted on the tip portion of the wiper arm 20. The wiper blade 30 is configured to perform a reciprocating wiping operation in a wiping range (not shown) formed between a lower reversal position and an upper reversal position on the surface of the windshield glass 11.

Specifically, the wiper device 10 is oscillated by a drive shaft SH provided on the vehicle. Here, the drive shaft SH is, for example, an output shaft of a wiper motor (not shown) installed near the bulkhead of the vehicle, and the base end portion of the wiper arm 20 is firmly fixed to the tip portion of the drive shaft SH by a fastening nut (not shown).

### [Wiper Arm]

The wiper arm 20 extends in the longitudinal direction of the wiper blade 30, and includes an arm head 21, an arm shank 22, and an arm piece 23. Specifically, the base end portion of the arm shank 22 is rotatably connected to the tip portion of the arm head 21, and the base end portion of the arm piece 23 is fixed by caulking to the tip portion of the arm shank 22.

### [Arm Head]

A drive shaft fixing portion 21a, which is fixed to the tip portion of the drive shaft SH, is provided at the base end portion of the arm head 21, thereby allowing the wiper arm 20 to be oscillated by the drive shaft SH. Furthermore, a first piping connection member 21b is mounted near the drive shaft fixing portion 21a, and the tip portion of a first washer tube (not shown) provided on the vehicle side is connected to the first piping connection member 21b.

Here, the base end portion of the first washer tube provided on the vehicle side is connected to a washer pump (not shown) installed in the engine room or the like of the vehicle. Thus, by driving the washer pump, a washer fluid W is supplied to the first piping connection member 21b, as indicated by the dashed arrows in FIG. 1.

Moreover, the washer fluid W corresponds to the cleaning fluid of the disclosure.

Further, the washer fluid W supplied to the first piping connection member 21b flows through a second washer tube TB installed along the wiper arm 20, and then is supplied to a washer unit 50 provided in the longitudinal central part of the wiper blade 30.

Here, the washer fluid W supplied to the washer unit 50 is divided into four branches within the washer unit 50 (see FIG. 6). Then, the washer fluid W branched within the washer unit 50 is sprayed at positions in four different directions, as a first washer fluid W1, a second washer fluid W2, a third washer fluid W3, and a fourth washer fluid W4, in the longitudinal direction of the wiper blade 30, as indicated by the dashed arrows in FIG. 1. As a result, the washer fluid W is evenly distributed to four locations on the surface of the windshield glass 11 on the forward path side of the wiper blade 30 and in the vicinity of the wiper blade 30.

In addition, a shank connecting portion 21c, to which the base end portion of the arm shank 22 is rotatably connected, is provided at the tip portion of the arm head 21. Specifically, the arm shank 22 is connected to the shank connecting portion 21c in a manner that allows for lock-back (erectable), and the lock-back state can be maintained by the spring force of a tension spring SP provided between the arm head 21 and the arm shank 22.

### [Arm Shank]

The arm shank 22 is formed with a substantially U-shaped cross-sectional shape along a direction perpendicular to the longitudinal direction thereof. Thus, the second washer tube TB and the tension spring SP can be accommodated inside the arm shank 22. Therefore, the overall appearance of the wiper device 10 is improved.

A head connecting portion 22a, which is rotatably connected to the shank connecting portion 21c of the arm head 21, is provided at the base end portion of the arm shank 22. Additionally, a piece fixing portion 22b, to which the base end portion of the arm piece 23 is fixed by caulking, is provided at the tip portion of the arm shank 22.

Then, the second washer tube TB accommodated inside the arm shank 22 is drawn out to the exterior of the arm shank 22 at the location of the piece fixing portion 22b. It should be noted that the second washer tube TB drawn out to the exterior of the arm shank 22 follows along the piece fixing portion 22b and the arm piece 23 substantially straight without slackening.

### [Arm Piece]

The arm piece 23 is formed in a rod shape that extends substantially straight in the longitudinal direction of the wiper blade 30. The base end portion of the arm piece 23 is fixed to the piece fixing portion 22b of the arm shank 22, and a U-shaped hook 23a is provided at the tip portion of the arm piece 23.

Specifically, a connecting member 40 of the wiper blade 30 is rotatably mounted on the U-shaped hook 23a via a clip member CL (see FIG. 4). Thus, the longitudinal central part of the wiper blade 30 is mounted on the tip portion of the arm piece 23, and the wiper blade 30 can slide in contact with the windshield glass 11 following the shape of the windshield glass 11.

Furthermore, a holding member 23b that holds the second washer tube TB is mounted in the substantially central part in the longitudinal direction of the arm piece 23. The holding member 23b holds the tip side of the second washer tube TB along the arm piece 23. As a result, the second washer tube TB does not slacken with respect to the arm piece 23.

### [Wiper Blade]

As shown in FIG. 1 to FIG. 4, the wiper blade 30 includes a rubber holder 31 and a blade rubber 32. The rubber holder 31 is a member that holds the blade rubber 32, and the longitudinal central part of the rubber holder 31 is rotatably connected to the U-shaped hook 23a of the arm piece 23.

The rubber holder 31 includes a single connecting member 40, a pair of holders 34, a pair of vertebrae 35, and a pair of caps 36. Also, the connecting member 40 holds the pair of vertebrae 35. Additionally, the clip member CL is rotatably mounted on the connecting member 40, and the U-shaped hook 23a of the arm piece 23 is fixed to the clip member CL. Furthermore, the pair of vertebrae 35 held by the connecting member 40 hold a blade body 32a of the blade rubber 32.

The pair of holders 34 are disposed on both longitudinal sides (tip side and base end side) of the connecting member 40, and hold the pair of vertebrae 35 in the same manner as the connecting member 40. Additionally, the pair of caps 36 are provided on the opposite side of the pair of holders 34 to the connecting member 40 in the longitudinal direction, and are fixed to the end portions of the pair of vertebrae 35. The caps 36 cover and conceal the end portions of the holders 34, the vertebrae 35, and the blade rubber 32, thereby improving the overall appearance of the wiper blade 30.

### [Blade Rubber]

As shown in FIG. 4, the blade rubber 32 includes the blade body 32a held by the pair of vertebrae 35, and a lip portion 32b that is slidably in contact with the surface of the windshield glass 11. Additionally, a neck portion 32c is provided between the blade body 32a and the lip portion 32b. The neck portion 32c is narrower in width than the lip portion 32b, and has more flexibility than the lip portion 32b.

Thus, as the blade rubber 32 reciprocates on the surface of the windshield glass 11, the lip portion 32b tilts, and consequently, the corner portion at the tip of the lip portion 32b cleanly wipes off the rainwater, dust, etc. adhering to the surface of the windshield glass 11. In other words, the wiper blade 30 wipes the surface of the windshield glass 11.

It should be noted that the surface of the windshield glass 11 corresponds to the wiping surface of the disclosure.

The blade rubber 32 is provided over the entire longitudinal area of the rubber holder 31, and has a cross-sectional shape along the lateral direction thereof that is the same shape in the entire longitudinal area of the blade rubber 32. Also, a pair of grooves 32d extending in the longitudinal direction of the blade rubber 32 are provided respectively on both lateral sides of the blade body 32a, that is, on both sides of the wiping direction (forward path side and backward path side) of the blade rubber 32. A part of the vertebra 35 in the lateral direction (a part of approximately 1/3 in the left-right direction in FIG. 4) is inserted into each of these grooves 32d.

Thereby, the blade rubber 32 is held by the connecting member 40 and the holders 34 via the pair of vertebrae 35. In other words, the blade rubber 32 is mounted on the connecting member 40.

### [Vertebra]

The pair of vertebrae 35 are formed in an elongated rod shape and have the function of a leaf spring, and are held by the connecting member 40 and the holders 34. The pair of vertebrae 35 are provided over the entire longitudinal area of the rubber holder 31, and the length dimension thereof is substantially equal to the length dimension of the blade rubber 32.

The pair of vertebrae 35 are pre-curved to a predetermined curvature in a free state without any external force applied. Specifically, the curvature of the vertebrae 35 is smaller than the curvature of the windshield glass 11. This enables the entire longitudinal area of the lip portion 32b to match the curvature of the windshield glass 11 and come into close contact with the surface of the windshield glass 11. In other words, by making the curvature of the vertebrae 35 smaller than the curvature of the windshield glass 11, sufficient wiping performance of the blade rubber 32 is ensured.

In addition, the other parts of the pair of vertebrae 35 in the lateral direction, that is, parts of approximately 2/3 in the left-right direction of FIG. 4 that do not enter the grooves 32d, are held by a pair of first claw portions 46 and a pair of second claw portions 47 (see FIG. 4 and FIG. 5A to FIG. 5C) provided on the connecting member 40, and are held by the pair of holders 34.

It should be noted that an engagement hole (not shown) is provided in the substantially central part in the longitudinal direction of the vertebra 35, and an engagement protrusion 48a (see FIG. 5A to FIG. 5C) provided on the connecting member 40 is hooked into the engagement hole. As a result, the movement of the pair of vertebrae 35 in the longitudinal direction is restricted with respect to the connecting member 40.

Moreover, cap fixing holes (not shown) are provided on both longitudinal sides of the vertebrae 35. Then, engagement protrusions (not shown) provided on the inside of the caps 36 are engaged with the cap fixing holes. Thereby, the caps 36 are fixed to both longitudinal sides of the vertebrae 35. Furthermore, the holders 34 are held by both the connecting member 40 and the caps 36.

Here, the holder 34 that holds the vertebra 35 is made of a flexible plastic material or the like. Thus, the holder 34 can elastically deform easily to follow the curved shape of the vertebra 35. Therefore, the holder 34 does not reduce the wiping performance of the wiper blade 30.

### [Connecting Member]

As shown in FIG. 2 to FIG. 4, the connecting member 40 is rotatably mounted on the U-shaped hook 23a of the arm piece 23 via the clip member CL. In other words, the connecting member 40 is rotatably mounted on the wiper arm 20 together with the blade rubber 32.

The connecting member 40, as shown in FIG. 5A to FIG. 5C, is formed in a substantially rectangular parallelepiped shape by injection molding of a resin material such as plastic, and extends in the longitudinal direction of the wiper blade 30. It should be noted that the connecting member 40 is a part that requires rigidity to hold the pair of vertebrae 35, and is made of a relatively high-hardness plastic material.

The connecting member 40 includes a first long side wall portion 41 and a second long side wall portion 42 that extend in the longitudinal direction of the wiper blade 30 and stand vertically with respect to the windshield glass 11. The first long side wall portion 41 is disposed on the front side (backward path side) of the vehicle when the wiper blade 30 is at the lower reversal position on the windshield glass 11. In contrast, the second long side wall portion 42 is disposed on the rear side (forward path side) of the vehicle when the wiper blade 30 is at the lower reversal position on the windshield glass 11.

In addition, a first bridging portion 43, a second bridging portion 44, and a third bridging portion 45, which are formed in a substantially flat plate shape, are provided between the first long side wall portion 41 and the second long side wall portion 42. The first bridging portion 43 is disposed on the longitudinal tip side (left side in FIG. 5A to FIG. 5C) of the connecting member 40. In contrast, the third bridging portion 45 is disposed on the longitudinal base end side (right side in FIG. 5A to FIG. 5C) of the connecting member 40. And, the second bridging portion 44 is disposed between the first bridging portion 43 and the third bridging portion 45 in the longitudinal direction of the connecting member 40.

Furthermore, a connecting pin PN, to which the clip member CL is swingably connected, is provided between the first long side wall portion 41 and the second long side wall portion 42, and between the first bridging portion 43 and the second bridging portion 44 in the longitudinal direction of the connecting member 40.

Additionally, the pair of first claw portions 46 and the pair of second claw portions 47 are provided on the windshield glass 11 side (back side) of the connecting member 40. Specifically, the pair of first claw portions 46 are disposed at locations corresponding to the first bridging portion 43 in the longitudinal direction of the connecting member 40, and the pair of second claw portions 47 are disposed at locations corresponding to the second bridging portion 44 in the longitudinal direction of the connecting member 40.

Also, the pair of first claw portions 46 and the pair of second claw portions 47 are provided respectively on the first long side wall portion 41 and the second long side wall portion 42, and each protrude toward the inside of the connecting member 40. Further, the first claw portions 46 and the second claw portions 47 respectively hold the pair of vertebrae 35. Specifically, the first claw portions 46 and the second claw portions 47 hold the vertebrae 35 with spacing in the longitudinal direction.

Furthermore, as shown in FIG. 5A to FIG. 5C, an elastic arm portion 48 extending to the longitudinal tip side of the connecting member 40 is provided on the second bridging portion 44 of the connecting member 40. Also, a pair of engagement protrusions 48a are provided on the tip side (left side in FIG. 5A to FIG. 5C) of the elastic arm portion 48. These engagement protrusions 48a respectively protrude to the windshield glass 11 side, and are engaged with the engagement holes (not shown) provided respectively on the pair of vertebrae 35.

### [Washer Unit Mounting Portion]

Additionally, a washer unit mounting portion 49 is provided on the forward path side of the second long side wall portion 42. Here, the second long side wall portion 42 is provided on one side of the connecting member 40 in the wiping direction of the blade rubber 32, and corresponds to the side wall portion on one side of the disclosure.

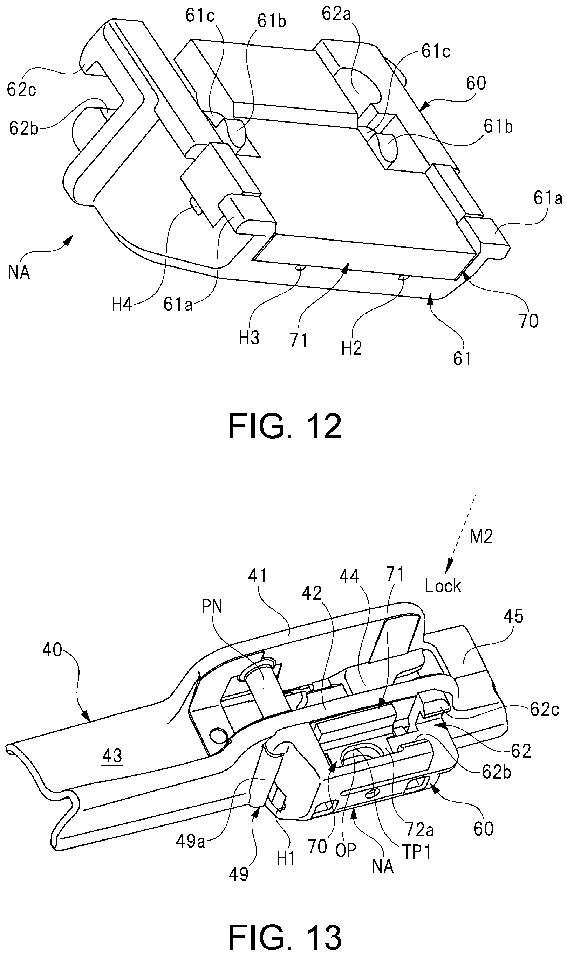

Then, the washer unit 50 (see FIG. 12) is mounted on the washer unit mounting portion 49 of the second long side wall portion 42. In this manner, the washer unit 50, together with the blade rubber 32, is rotatably mounted on the wiper arm 20 via the connecting member 40.

The washer unit mounting portion 49 includes a pair of guide rails 49a that slidably guide the washer unit 50. Specifically, the guide rails 49a are formed in a substantially L-shape when seen from the front side and the back side of the connecting member 40, and extend between the front side and the back side of the second long side wall portion 42. Then, the washer unit 50 can be mounted on the connecting member 40 by following the guide rails 49a from the front side toward the back side.

In addition, the washer unit mounting portion 49 is provided with an abutment portion 49b against which a valve member 70 forming the washer unit 50 abuts. Specifically, the abutment portion 49b protrudes from the second long side wall portion 42 to the forward path side in the wiping direction of the wiper blade 30 at a predetermined height. Then, in a state where the washer unit 50 is mounted on the washer unit mounting portion 49, a valve body 71 of the valve member 70 abuts against the abutment portion 49b while elastically deforming. Thereby, the washer unit 50 is fixed to the connecting member 40 without rattling.

Furthermore, on both sides of the abutment portion 49b in the longitudinal direction of the connecting member 40, claw grooves 49c are provided into which tip protrusions 61b (see FIG. 6) provided on engagement claw portions 61c of a cover member 60 respectively enter. The pair of tip protrusions 61b respectively enter into these claw grooves 49c, and on the longitudinal front side of the claw grooves 49c, hooking portions 49d are provided onto which the tip protrusions 61b are hooked. Then, by hooking the pair of tip protrusions 61b onto the pair of hooking portions 49d, the washer unit 50 is fixed to the connecting member 40 in a state that prevents the washer unit 50 from coming off.

It should be noted that in the vicinity of the hooking portions 49d on the abutment portion 49b, a tapered surface TP is provided to guide the mounting of the valve body 71 forming the valve member 70 onto the abutment portion 49b. Thus, it is possible to easily abut the valve body 71 of the valve member 70 against the abutment portion 49b while elastically deforming the valve body 71. In other words, the tapered surface TP has a function to improve the assemblability of the washer unit 50 to the connecting member 40.

### [Washer Unit]

As shown in FIG. 1 to FIG. 4, the washer unit 50 is mounted on the second long side wall portion 42 (forward path side) of the connecting member 40. The washer unit 50 is a unit for spraying the washer fluid W (first washer fluid W1 to fourth washer fluid W4) toward the surface of the windshield glass 11, and as shown in FIG. 6 to FIG. 8A and FIG. 8B, includes the cover member 60, the valve member 70, and a piping connection member 80.

Specifically, as shown in FIG. 1, the washer unit 50 sprays the washer fluid W flowing through the second washer tube TB at different positions in the longitudinal direction of the blade rubber 32 on one side (forward path side) in the wiping direction of the blade rubber 32. Specifically, the washer fluid W is divided into four branches, first washer fluid W1 to fourth washer fluid W4, within the washer unit 50.

### [Cover Member]

As shown in FIG. 6, the cover member 60 is formed in a substantially box shape using a resin material such as plastic, and includes a cover body 61 and a piping connection member fixing portion 62. Specifically, the cover body 61 is disposed on the windshield glass 11 side (back side) of the cover member 60, and the piping connection member fixing portion 62 is disposed on the opposite side (front side) of the windshield glass 11 side of the cover member 60.

On both longitudinal sides (tip side and base end side) of the cover body 61, engagement portions 61a are provided respectively to engage with the pair of guide rails 49a (see FIG. 5A to FIG. 5C) of the washer unit mounting portion 49. Specifically, the engagement portions 61a respectively protrude at a predetermined height toward both longitudinal sides of the cover member 60.

It should be noted that the cover member 60 is disposed facing the second long side wall portion 42 (washer unit mounting portion 49), and corresponds to the first mounting member of the disclosure.

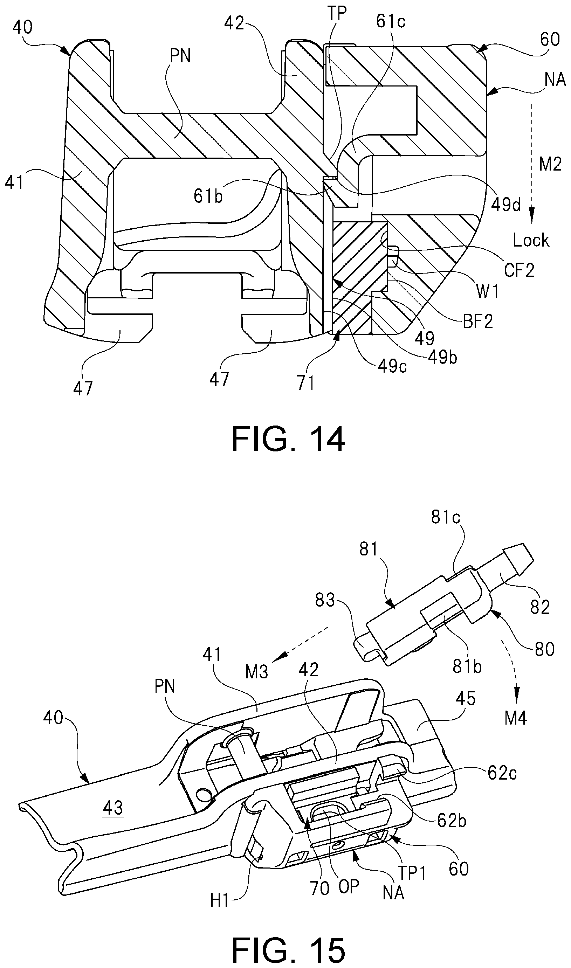

Additionally, the pair of engagement claw portions 61c having the tip protrusions 61b are provided on the inside of the cover body 61. These engagement claw portions 61c have flexibility in the thickness direction of the cover body 61, that is, in the wiping direction of the blade rubber 32 (see FIG. 2 and FIG. 4). Then, the tip protrusions 61b of the engagement claw portions 61c enter into the claw grooves 49c (see FIG. 5 A to FIG. 5C) of the washer unit mounting portion 49, and are hooked onto the hooking portions 49d (see FIG. 14).

Furthermore, on the inside of the cover body 61, a cover member side first surface CF1 is provided, against which a valve member side first surface BF1 (see FIG. 7A to FIG. 7C) forming the valve body 71 of the valve member 70 abuts. Additionally, on the inside of the cover body 61, a cover member side second surface CF2 is provided, against which a valve member side second surface BF2 (see FIG. 7A to FIG. 7C) forming the valve body 71 of the valve member 70 abuts.

Here, as shown in FIG. 6, the cover member side first surface CF1 is indicated by light-colored hatching, and the cover member side second surface CF2 is indicated by dark-colored hatching.

Specifically, the cover member side first surface CF1 extends straight along the longitudinal direction of the cover body 61, and the cover member side second surface CF2 is inclined at a predetermined angle with respect to the longitudinal direction of the cover body 61. Also, in the space of the substantially central part on the inside of the cover member 60, a valve chamber RM is provided to accommodate a check valve 72 (see FIG. 7A to FIG. 7C) of the valve member 70.

Moreover, on the cover member side first surface CF1 and the cover member side second surface CF2, a first groove G1, a second groove G2, a third groove G3, and a fourth groove G4 are provided to divide the washer fluid W that has passed through the check valve 72 into four branches, first washer fluid W1 to fourth washer fluid W4. It should be noted that the first groove G1 to the fourth groove G4 form part of a first flow path FP1, a second flow path FP2, a third flow path FP3, and a fourth flow path FP4 through which the first washer fluid W1 to the fourth washer fluid W4 flow.

Here, the second groove G2 and the third groove G3 are consolidated into one groove on the valve chamber RM side (upstream side). Additionally, the cover member side second surface CF2 is provided in the first groove G1. And, the first groove G1 to the fourth groove G4 are all recessed at a predetermined depth from the cover member side first surface CF1 and the cover member side second surface CF2 toward the forward path side in the wiping direction of the blade rubber 32.

As shown in FIG. 6, an arc-shaped recess 62a is provided on the longitudinal tip side (right side in the figure) of the piping connection member fixing portion 62. Additionally, a first fixing claw 62b and a second fixing claw 62c are provided on the longitudinal base end side (left side in the figure) of the piping connection member fixing portion 62.

Specifically, a rotation fixing portion 83 (see FIG. 8A and FIG. 8B) of the piping connection member 80 is inserted into the arc-shaped recess 62a, and the arc-shaped recess 62a rotatably supports the rotation fixing portion 83. Additionally, the first fixing claw 62b and the second fixing claw 62c are disposed at different positions in the longitudinal direction of the piping connection member fixing portion 62. Then, the first fixing claw 62b enters into and is fixed to a first hooking recess 81b (see FIG. 8A and FIG. 8B) provided on a piping connection body 81 of the piping connection member 80. On the other hand, the second fixing claw 62c enters into and is fixed to a second hooking recess 81c (see FIG. 8A and FIG. 8B) provided on the piping connection body 81 of the piping connection member 80.

Here, among the first fixing claw 62b and the second fixing claw 62c, the first fixing claw 62b is elastically movable in the wiping direction of the blade rubber 32 (see FIG. 4). Specifically, the first fixing claw 62b is movable with respect to the second fixing claw 62c by the load of an external force.

Thus, by inserting the rotation fixing portion 83 into the arc-shaped recess 62a, and respectively fixing the first fixing claw 62b and the second fixing claw 62c of the piping connection member fixing portion 62 to the first hooking recess 81b and the second hooking recess 81c of the piping connection body 81, the piping connection member 80 is fixed to the cover member 60.

### [Valve Member]

As shown in FIG. 7A to FIG. 7C, the valve member 70 is made of a resin material such as silicone rubber, and includes the valve body 71 and the check valve 72 provided integrally with the valve body 71. In other words, the valve member 70 is flexible and elastically deformable, and the hardness of the valve member 70 is lower than the hardness of the cover member 60.

The valve body 71 is formed in a substantially flat plate shape, and the valve member side first surface BF1 and the valve member side second surface BF2 are provided on the forward path side in the wiping direction of the blade rubber 32 (see FIG. 4). Here, as shown in FIG. 7A to FIG. 7C, the valve member side first surface BF1 is indicated by light-colored hatching, and the valve member side second surface BF2 is indicated by dark-colored hatching.

It should be noted that the valve member 70 corresponds to the second mounting member of the disclosure, and the valve body 71 corresponds to the body portion of the disclosure.

Then, in a state where the washer unit 50 is assembled, the valve body 71 is disposed between the second long side wall portion 42 of the connecting member 40 and the cover body 61 of the cover member 60, and is fixed to both the second long side wall portion 42 and the cover body 61.

Specifically, the valve member side first surface BF1 abuts against and is in close contact with the cover member side first surface CF1 (see FIG. 6) on the inside of the cover body 61. Thus, the second groove G2 to the fourth groove G4 (see FIG. 6) of the cover body 61 are covered by the valve member side first surface BF1 of the valve body 71. Therefore, the second flow path FP2 to the fourth flow path FP4 (see FIG. 6), through which the second washer fluid W2 to the fourth washer fluid W4 flow, are formed within the washer unit 50.

Further, in a state where the washer unit 50 is assembled, the valve member side second surface BF2 abuts against and is in close contact with the cover member side second surface CF2 (see FIG. 6) on the inside of the cover body 61. Thus, the first groove G1 (see FIG. 6) of the cover body 61 is covered by the valve member side second surface BF2 of the valve body 71. Therefore, the first flow path FP1 (see FIG. 6), through which the first washer fluid W1 flows, is formed within the washer unit 50.

In this manner, the valve member side first surface BF1 and the valve member side second surface BF2 of the valve body 71 of the valve member 70 cover the first groove G1 to the fourth groove G4 to form the first flow path FP1 to the fourth flow path FP4. In other words, the first flow path FP1 to the fourth flow path FP4, through which the first washer fluid W1 to the fourth washer fluid W4 flow, are disposed between the cover member 60 and the valve member 70.

It should be noted that the first flow path FP1 to the fourth flow path FP4 correspond to the flow path of the disclosure.

In addition, the check valve 72 is provided to protrude on the side (forward path side) where the valve member side first surface BF1 and the valve member side second surface BF2 are provided with respect to the valve body 71. The check valve 72 is accommodated in the valve chamber RM (see FIG. 6) of the cover member 60 in a state where the washer unit 50 is assembled. And, the check valve 72 is formed to be hollow and elastically deformable, and can be opened and closed within the valve chamber RM, that is, between the second long side wall portion 42 of the connecting member 40 and the cover member 60. In this manner, the hollow check valve 72 is disposed on the upstream side of the first flow path FP1 to the fourth flow path FP4.

Specifically, the check valve 72 includes a base portion 72a formed in a substantially rectangular parallelepiped shape, and a valve body 72b protruding from the base portion 72a toward the windshield glass 11 side (back side). Then, on the opposite side (front side) of the valve body 72b side of the base portion 72a, an opening OP is formed, into which an insertion portion 81e (see FIG. 8A and FIG. 8B) of the piping connection member 80 is inserted.

Here, an opening side tapered portion TP1 that guides the connection (insertion) of the insertion portion 81e, as shown in the [front side] of FIG. 7A, is formed on the inlet side of the opening OP where the insertion portion 81e is inserted.

In addition, the outlet side of the valve body 72b is disposed on the upstream side of the first flow path FP1 to the fourth flow path FP4, and the washer fluid W that has flowed out from the valve body 72b flows through the first flow path FP1 to the fourth flow path FP4 to become the first washer fluid W1 to the fourth washer fluid W4.

It should be noted that a first spray hole H1, a second spray hole H2, a third spray hole H3, and a fourth spray hole H4 (see FIG. 12 and FIG. 13) are provided respectively on the downstream side of the first flow path FP1 to the fourth flow path FP4 formed within the washer unit 50. In other words, the washer unit 50 includes a total of four spray holes, first spray hole H1 to fourth spray hole H4.

Here, the second spray hole H2 to the fourth spray hole H4 respectively spray the second washer fluid W2 to the fourth washer fluid W4 on one side (forward path side) in the wiping direction of the blade rubber 32 and in the vicinity of the blade rubber 32. In contrast, the first spray hole H1 sprays the first washer fluid W1 on one side (forward path side) in the wiping direction of the blade rubber 32 and at a position away from the blade rubber 32. The first spray hole H1 to the fourth spray hole H4, as shown in FIG. 1, spray the first washer fluid W1 to the fourth washer fluid W4 respectively at different positions in the longitudinal direction of the blade rubber 32.

As shown in FIG. 1, the first washer fluid W1 is sprayed at a position away from the blade rubber 32 on the longitudinal tip side of the blade rubber 32, and the fourth washer fluid W4 is sprayed in the vicinity of the blade rubber 32 on the longitudinal base end side of the blade rubber 32. This is because when the wiper device 10 oscillates, the longitudinal tip side of the blade rubber 32 moves at a higher speed than the longitudinal base end side of the blade rubber 32. By differentiating the spray positions between the longitudinal tip side and the longitudinal base end side of the blade rubber 32 in this manner, it is possible to sufficiently moisten dust or the like adhering to the surface of the windshield glass 11, thereby improving the cleaning performance.

And, as shown in FIG. 2, FIG. 3, FIG. 12, and FIG. 13, the first spray hole H1 to the fourth spray hole H4 are disposed closer to the surface of the windshield glass 11 than the connecting pin PN that connects the wiper arm 20 and the connecting member 40.

More specifically, the symbol C indicated by the one-dot chain line in FIG. 2 is the axial center of the connecting pin PN, and the first spray hole H1 to the fourth spray hole H4 are disposed closer to the surface of the windshield glass 11 than the axial center C. As a result, the first washer fluid W1 to the fourth washer fluid W4 sprayed from the first spray hole H1 to the fourth spray hole H4 reach the surface of the windshield glass 11 through a relatively short spray distance. Therefore, variations in the spray position due to driving wind, etc. during vehicle travel are suppressed.

As shown in FIG. 7A to FIG. 7C, the valve body 72b adopts a so-called duckbill valve structure. In other words, the valve body 72b has a check valve structure with a simple shape that does not include a valve body or coil spring for opening and closing the flow path. Additionally, the valve body 72b extends to both longitudinal sides (tip side and base end side) of the wiper blade 30. This suppresses the washer unit 50 from becoming large in size on both sides (forward path side and backward path side) in the wiping direction of the blade rubber 32.

Specifically, on the outlet side of the valve body 72b, that is, on the downstream side in the flow direction of the washer fluid W in the valve body 72b, a slit SL that can be opened and closed is provided in the valve chamber RM between the second long side wall portion 42 and the cover member 60. The slit SL is surrounded and formed by a pair of first opposing walls WL1 that face each other in the longitudinal direction of the blade rubber 32, and a pair of second opposing walls WL2 that face each other in the wiping direction of the blade rubber 32.

Also, the thickness t1 of the first opposing wall WL1 along the longitudinal direction of the blade rubber 32 is thicker than the thickness t2 of the second opposing wall WL2 along the wiping direction of the blade rubber 32 (t1>t2). Thus, the valve body 72b is elastically deformed against the restoring force of the valve body 72b as the internal pressure increases, and can be opened in the wiping direction of the blade rubber 32, as indicated by the dashed arrow Open in FIG. 7C.

Here, the slit SL is opened against the restoring force of the check valve 72 when the internal pressure of the check valve 72 increases (when the washer pump is driven). Further, the slit SL is closed by the restoring force of the check valve 72 when the internal pressure of the check valve 72 decreases (when the washer pump is stopped). It should be noted that the opening and closing operation of the valve body 72b will be described in detail later.

### [Piping Connection Member]

As shown in FIG. 8A and FIG. 8B, the piping connection member 80 is formed in a substantially rectangular parallelepiped shape using a resin material such as plastic, and includes the piping connection body 81. In addition, a tube connection portion 82, which extends in the longitudinal direction of the blade rubber 32 and to which the second washer tube TB (see FIG. 3) is connected, is provided on the longitudinal base end side of the piping connection body 81. Furthermore, the rotation fixing portion 83, which is inserted into the arc-shaped recess 62a (see FIG. 6) of the cover member 60, is provided on the longitudinal tip side of the piping connection body 81, that is, on the opposite side of the tube connection portion 82 in the longitudinal direction of the piping connection member 80.

Here, the piping connection member 80 is a member mounted on the cover member 60, and has a function to supply the washer fluid W flowing through the second washer tube TB, which is provided along the wiper arm 20, to the first flow path FP1 to the fourth flow path FP4. Additionally, similar to the cover member 60, the piping connection member 80 is made of harder plastic or the like than the valve member 70.

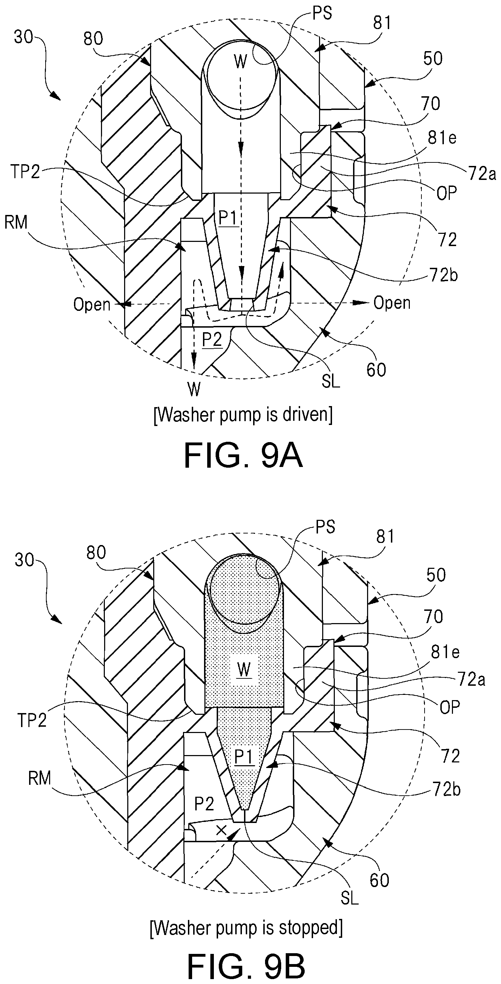

The tube connection portion 82 is formed in a substantially cylindrical shape, and the longitudinal tip side of the tube connection portion 82 is integrally connected to the longitudinal base end side of the piping connection body 81. Also, a flange portion 82a that bulges outward in the radial direction is provided on the longitudinal base end side of the tube connection portion 82. Thus, the second washer tube TB connected to the tube connection portion 82 is prevented from coming off. Then, the washer fluid W that has flowed from the second washer tube TB into the tube connection portion 82 reaches the first flow path FP1 to the fourth flow path FP4 from the interior of the check valve 72 via a flow passage PS (see FIG. 9A and FIG. 9B) inside the piping connection body 81.

As shown in FIG. 8A and FIG. 8B, the rotation fixing portion 83 is formed in a substantially half-cylindrical shape, and is integrally provided on the longitudinal tip side of the piping connection body 81. Specifically, the rotation fixing portion 83 is provided to protrude on the longitudinal tip side of the piping connection body 81, with an axis R extending in the wiping direction (forward path side and backward path side) of the wiper blade 30.

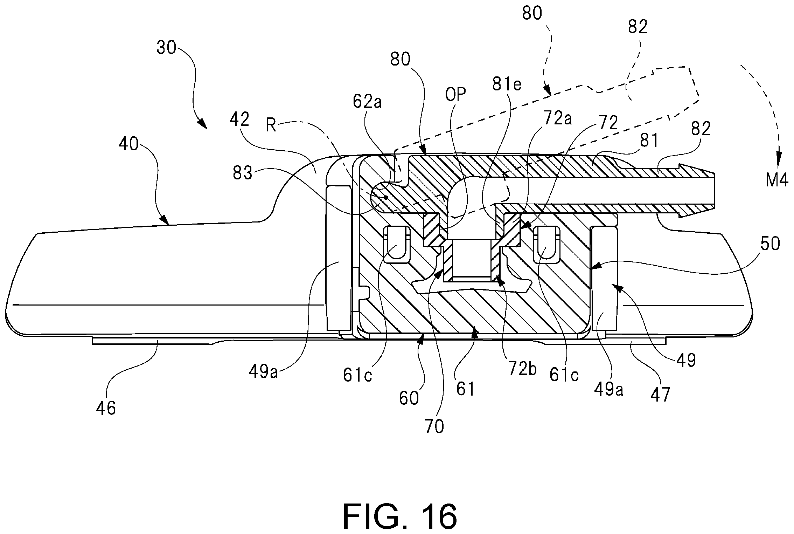

Thus, the rotation fixing portion 83 inserted into the arc-shaped recess 62a (see FIG. 6) of the cover member 60 can rotate around the axis R as the center (see FIG. 16). In other words, as shown in FIG. 16, the piping connection member 80 is rotatable with respect to the cover member 60, around the rotation fixing portion 83 as the center.

The piping connection body 81 is formed in a substantially rectangular parallelepiped shape, and extends in the longitudinal direction of the wiper blade 30. And, the first hooking recess 81b and the second hooking recess 81c are provided on the side where a front side surface 81a of the piping connection body 81 is provided. Specifically, the first hooking recess 81b and the second hooking recess 81c are disposed at mutually different positions in the longitudinal direction of the piping connection body 81. Then, the first fixing claw 62b (see FIG. 6) of the cover member 60 is hooked into the first hooking recess 81b. On the other hand, the second fixing claw 62c (see FIG. 6) of the cover member 60 is hooked into the second hooking recess 81c.

Additionally, the insertion portion 81e is provided on the side where a back side surface 81d of the piping connection body 81 is provided. The insertion portion 81e is disposed between the tube connection portion 82 and the rotation fixing portion 83 in the longitudinal direction of the piping connection member 80, and extends in a direction (a direction from the front side to the back side) intersecting the longitudinal direction of the tube connection portion 82. Specifically, the insertion portion 81e protrudes from the back side surface 81d at a predetermined height to the windshield glass 11 side (back side).

The insertion portion 81e is formed in a substantially oval shape, and in a state where the washer unit 50 is assembled, the insertion portion 81e is inserted and fixed into the opening OP (see FIG. 7A to FIG. 7C) provided in the base portion 72a of the valve member 70. In other words, the insertion portion 81e is inserted from the front side toward the back side of the washer unit 50, into the opening OP of the base portion 72a. As a result, the washer fluid W flowing through the flow passage PS within the piping connection member 80 flows into the check valve 72 (base portion 72a and valve body 72b).

Also, as shown in the [back side perspective view] of FIG. 8B, an insertion portion side tapered portion TP2, which guides the connection (insertion) into the opening OP, is formed on the tip side that is the insertion side of the insertion portion 81e.

In this manner, the insertion portion side tapered portion TP2 of the insertion portion 81e cooperates with the opening side tapered portion TP1 of the opening OP to guide the mutual connection between the insertion portion 81e and the opening OP, making it easy to connect the insertion portion 81e and the opening OP.

### [Flow Path of Washer Fluid]

Next, the flow path of the washer fluid W in the wiper blade 30 formed as described above, particularly within the washer unit 50, will be described in detail using the figures.

FIG. 9A and FIG. 9B show enlarged views of the dashed circle B part of FIG. 4, showing the operation of the valve body.

First, when the operator operates a washer switch (not shown) installed in the vehicle, the washer pump is driven. Then, as shown in FIG. 1, the washer fluid W is supplied into the second washer tube TB via the first piping connection member 21b. Subsequently, the washer fluid W supplied into the second washer tube TB is supplied into the washer unit 50.

Next, the washer fluid W supplied into the washer unit 50 flows through the flow passage PS of the piping connection member 80, as indicated by the dashed arrow shown in [Washer pump is driven] of FIG. 9A, and is supplied into the base portion 72a and the valve body 72b forming the check valve 72 of the valve member 70. Then, the internal pressure P1 of the valve body 72b becomes greater than the external pressure P2 outside on the downstream side (P1>P2).

As a result, the valve body 72b having flexibility is opened (valve-opened), as indicated by the dashed arrow Open, against the restoring force of the valve body 72b itself. Specifically, the opening direction of the valve body 72b is, as shown in FIG. 7A to FIG. 7C, on both sides (forward path side and backward path side) in the wiping direction of the blade rubber 32.

Then, the washer fluid W that has flowed out to the downstream side of the valve body 72b flows into the valve chamber RM on the inside of the cover member 60, and thereafter, as shown in FIG. 6, the washer fluid W is branched into the first flow path FP1 to the fourth flow path FP4. Thus, the washer fluid W becomes the first washer fluid W1 to the fourth washer fluid W4, and is sprayed from the first spray hole H1 to the fourth spray hole H4 (see FIG. 12 and FIG. 13) toward the surface of the windshield glass 11.

After cleaning the surface of the windshield glass 11, the washer pump is stopped when the operator stops operating the washer switch. Then, the state shown in [Washer pump is stopped] of FIG. 9B is achieved. Specifically, the washer fluid W remains (see hatched part) inside the piping connection member 80 and the valve member 70 of the washer unit 50, including the interior of the second washer tube TB (see FIG. 1). This is because the drive of the washer pump is stopped, the internal pressure P1 of the valve body 72b decreases, and the valve body 72b is closed (valve-closed) by the restoring force of the valve body 72b itself. Specifically, due to the closing operation of the valve body 72b, as indicated by the dashed arrow × in FIG. 9B, the backflow of air to the interior of the valve body 72b is prevented.

Thus, when the washer pump is driven next time (at the next drive of the washer pump), the first washer fluid W1 to the fourth washer fluid W4 can be quickly sprayed from the first spray hole H1 to the fourth spray hole H4 toward the surface of the windshield glass 11 (improving responsiveness).

### [Assembly Method]

Next, an assembly method of the wiper blade 30 formed as described above, particularly the procedure for mounting (fixing) the washer unit 50 to the connecting member 40, will be described in detail using the figures.

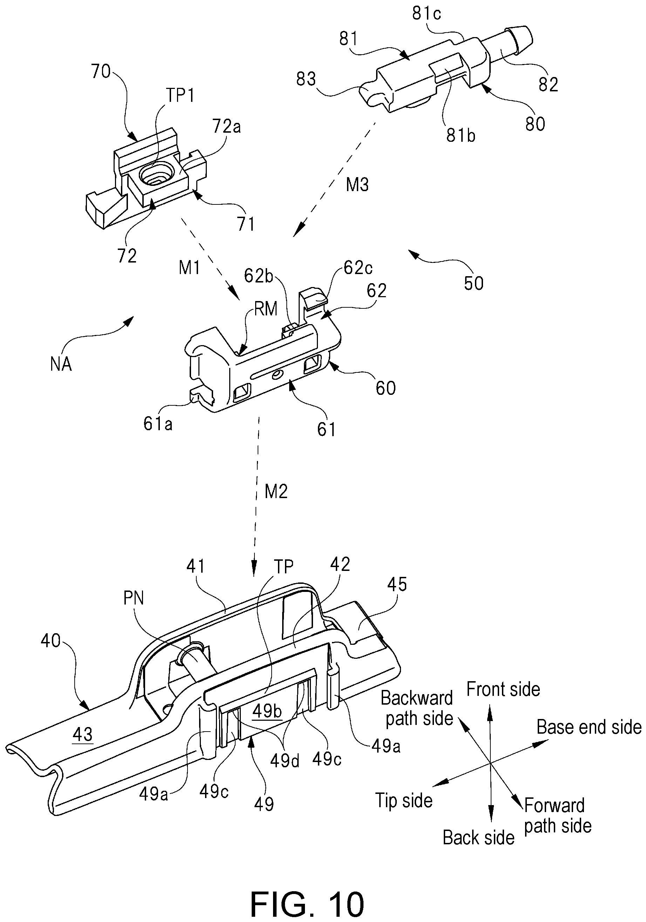

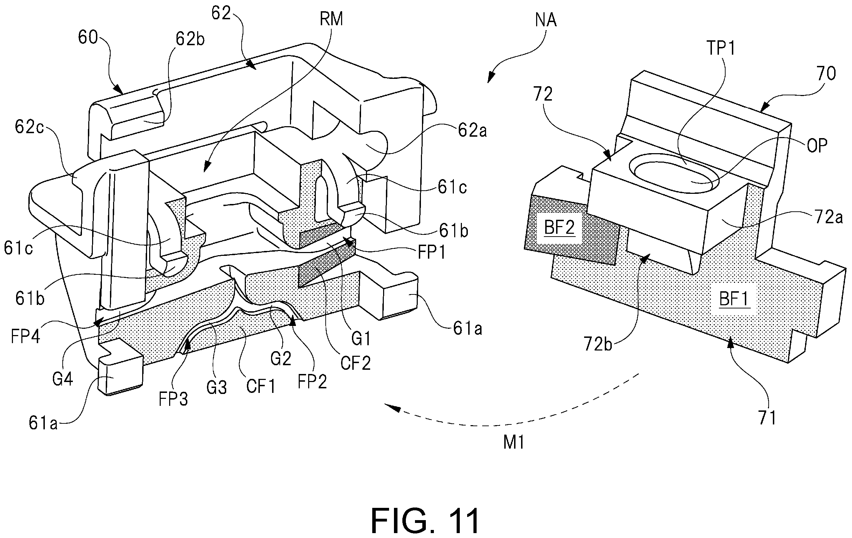

FIG. 10 shows an exploded perspective view of the washer unit, FIG. 11 shows a view showing the assembly procedure of the nozzle assembly, FIG. 12 shows a perspective view of the nozzle assembly as seen from the valve member side, FIG. 13 shows a view showing the mounting procedure of the nozzle assembly to the connecting member, FIG. 14 shows a cross-sectional view showing the fixing portion of the nozzle assembly and the connecting member, FIG. 15 shows a perspective view showing the assembly procedure of the piping connection member to the nozzle assembly, and FIG. 16 shows a cross-sectional view showing the assembly procedure of the piping connection member to the nozzle assembly.

First, as shown in FIG. 10, the cover member 60, the valve member 70, and the piping connection member 80, which have been manufactured through separate manufacturing processes, are prepared. Here, in FIG. 10, the connecting member 40 to which the washer unit 50 is to be assembled is shown individually, but it is also possible to pre-assemble the blade rubber 32 (see FIG. 4), etc. to the connecting member 40.

Next, as indicated by the dashed arrow M1 in FIG. 10 and FIG. 11, the cover member 60 and the valve member 70 are abutted against each other in the wiping direction of the blade rubber 32. Specifically, while inserting the check valve 72 of the valve member 70 into the valve chamber RM of the cover member 60, the valve member side first surface BF1 of the valve member 70 is abutted against the cover member side first surface CF1 of the cover member 60. Further, the valve member side second surface BF2 of the valve member 70 is abutted against the cover member side second surface CF2 of the cover member 60.

Thereby, the assembly of the cover member 60 and the valve member 70 is completed, and as shown in FIG. 12, a nozzle assembly NA is completed. Here, since the cover member 60 is made of a resin material such as high-hardness plastic, which is harder than the valve member 70 made of silicone rubber or the like, the first groove G1 to the fourth groove G4 of the cover member 60 themselves do not deform.

In addition, the valve member side first surface BF1 and the valve member side second surface BF2 are designed to the extent of covering the first groove G1 to the fourth groove G4, and are not strongly pressed against the cover member side first surface CF1 and the cover member side second surface CF2. Therefore, the flow path areas of the first flow path FP1 to the fourth flow path FP4 do not change significantly, and there is no variation in the spray amount of the first washer fluid W1 to the fourth washer fluid W4 (see FIG. 1) among products.

Next, as indicated by the dashed arrow M2 in FIG. 10 and FIG. 13, the completed nozzle assembly NA is mounted on the washer unit mounting portion 49 of the connecting member 40. Specifically, the valve member 70 side of the nozzle assembly NA is brought to face the washer unit mounting portion 49, and in this state, faces the front side (upper side in the figure) of the connecting member 40. Then, the engagement portions 61a of the cover member 60 are engaged with the guide rails 49a of the washer unit mounting portion 49.

Thereafter, the cover member 60 is slid against the washer unit mounting portion 49, and this sliding operation is continued. Then, as shown in FIG. 14, the tip protrusions 61b forming the engagement claw portions 61c of the cover member 60 ride over the tapered surface TP and enter into the claw grooves 49c, and are hooked onto the hooking portions 49d respectively.

Thereby, the cover member 60 becomes locked to the connecting member 40, and the assembly of the nozzle assembly NA to the washer unit mounting portion 49 is completed. At this time, the valve body 71 of the valve member 70 (see FIG. 14) is slightly elastically deformed and sandwiched between the abutment portion 49b of the washer unit mounting portion 49 and the cover member side first surface CF1 and the cover member side second surface CF2 of the cover member 60. Therefore, the valve body 71 also functions as a cushioning material, and thus prevents the cover member 60 from rattling with respect to the connecting member 40.

Next, as indicated by the dashed arrow M3 in FIG. 10 and FIG. 15, the rotation fixing portion 83 of the piping connection member 80 is brought to face the arc-shaped recess 62a of the cover member 60 (see FIG. 6 and FIG. 11). At this time, the piping connection member 80 is inclined with respect to the longitudinal direction of the connecting member 40, and in this state, disposed facing from the front side of the connecting member 40. Thereby, as shown in the dashed part of FIG. 16, the rotation fixing portion 83 of the piping connection member 80 is engaged with the arc-shaped recess 62a of the cover member 60.

Subsequently, as indicated by the dashed arrow M4 in FIG. 15 and FIG. 16, the piping connection member 80 is rotated (tilted) to incline with respect to the cover member 60, with the axis R as the center. Then, the first fixing claw 62b of the piping connection member fixing portion 62 is hooked into the first hooking recess 81b of the piping connection body 81, and the second fixing claw 62c of the piping connection member fixing portion 62 is hooked into the second hooking recess 81c of the piping connection body 81.

Thus, as shown in FIG. 9A, FIG. 9B, and FIG. 16, the insertion portion 81e of the piping connection member 80 is inserted and fixed into the opening OP while elastically deforming the base portion 72a of the check valve 72, thereby completing the washer unit 50. At this time, since the piping connection member 80 is pressed against the base portion 72a while elastically deforming the base portion 72a, the base portion 72a also functions as a cushioning material. Therefore, the piping connection member 80 is prevented from rattling with respect to the cover member 60.

It should be noted that, when fixing the first fixing claw 62b into the first hooking recess 81b and fixing the second fixing claw 62c into the second hooking recess 81c while supporting the rotation fixing portion 83 in the arc-shaped recess 62a, the piping connection member 80 is restricted from moving in the longitudinal direction and the wiping direction of the blade rubber 32 with respect to the piping connection member fixing portion 62. Therefore, it is possible to easily connect both the insertion portion 81e and the opening OP without visual confirmation (improving assembly workability).

Thereby, the assembly of the wiper blade 30 is completed. It should be noted that in FIG. 16, the illustration of the blade rubber 32 (see FIG. 4), etc. is omitted.

Thereafter, while mounting the completed wiper blade 30 on the arm piece 23 via the clip member CL (see FIG. 3), the tip portion of the second washer tube TB is connected to the tube connection portion 82 of the piping connection member 80. Thereby, the assembly of the wiper device 10 is completed.

It should be noted that the tip portion of the second washer tube TB can be pre-connected to the tube connection portion 82 of the piping connection member 80, and after the connecting member 40 is mounted on the arm piece 23, the piping connection member 80 with the second washer tube TB connected can be mounted on the cover member 60 in the assembly procedure.

### [Modified Example 1]

Next, a modified example of the valve member will be described in detail using the figures.

It should be noted that the same symbols are assigned to parts having the same function as the aforementioned valve member 70 (see FIG. 7A to FIG. 7C), and a detailed description will be omitted.

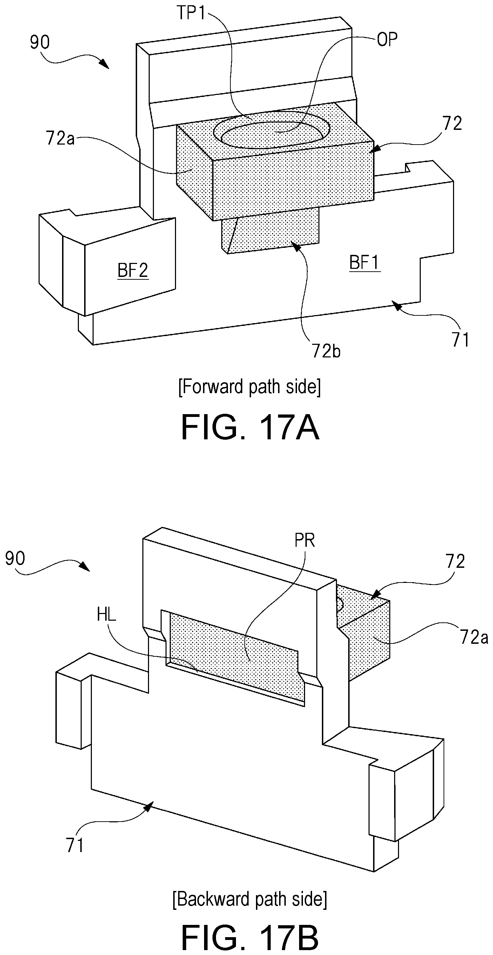

FIG. 17A and FIG. 17B are perspective views showing a modified example of the valve member.

As shown in FIG. 17A and FIG. 17B, in a valve member 90 of the modified example, the only difference compared to the valve member 70 (see FIG. 7A to FIG. 7C) is that the valve body 71 (white part) and the check valve 72 (hatched part) have different hardness from each other. Specifically, both the valve body 71 and the check valve 72 are made of a resin material such as silicone rubber, but the hardness of the check valve 72 is lower than the hardness of the valve body 71. In other words, the hardness of the valve body 72b is lower than the hardness of the valve body 71.

It should be noted that the valve member 90 corresponds to the second mounting member of the disclosure.

Thus, it is possible to easily open the check valve 72, and avoid placing a large load on the washer pump. On the other hand, if the check valve 72 is made too soft, the washer fluid W inside the check valve 72 may leak out when the washer pump stops, leading to a decrease in responsiveness during the next spray of the washer fluid W. Therefore, it is desirable to appropriately set the hardness of the check valve 72 according to the specifications required for the washer unit 50 (see FIG. 4).

It should be noted that, regarding the manufacturing method of the valve member 90, it is possible to individually mold the valve body 71 and the check valve 72 in advance, and then insert and fix a protrusion PR (see FIG. 17A and FIG. 17B) of the check valve 72 into a mounting hole HL (see FIG. 17A and FIG. 17B) of the valve body 71. Alternatively, it is also possible to adhere the check valve 72 to the valve body 71 using an adhesive or the like.

Furthermore, the valve body 71 and the check valve 72 may be molded in advance to be integrated by two-color molding, respectively.

### [Modified Example 2]

As another modified example, the material of the valve body 71 can be the same material (resin material such as plastic) as the material of the cover member 60. In this case, to abut the resin valve body 71 and the resin cover member 60 to form the first flow path FP1 to the fourth flow path FP4, it is desirable to weld the valve body 71 and the cover member 60 to each other so as to prevent leakage of the washer fluid W.

Specifically, it is desirable to weld only the vicinity of the valve chamber RM and the first groove G1 to the fourth groove G4 of the cover member 60. Thereby, deformation of the cover member 60 and the valve body 71 due to heat can be suppressed, and energy conservation in the manufacturing process during the welding work can be achieved.

### [Modified Example 3]

Next, a modified example of the connecting member will be described in detail using the figures.

It should be noted that the same symbols are assigned to parts having the same function as the aforementioned embodiment, and a detailed description will be omitted.

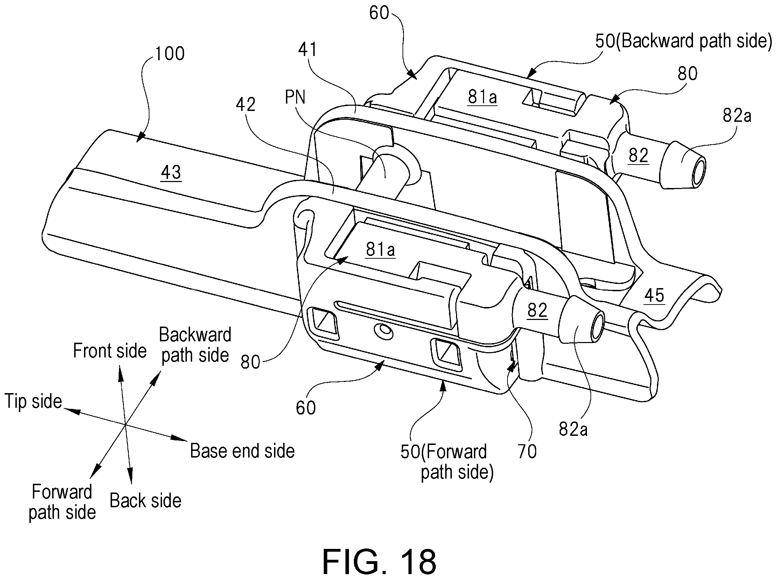

FIG. 18 is a perspective view showing a modified example including the washer units on the forward path side and the backward path side of the connecting member.

As shown in FIG. 18, in a connecting member 100 of the modified example, the washer unit 50 is also mounted on the first long side wall portion 41 disposed on the forward path side of the connecting member 100. In other words, in the modified example shown in FIG. 18, it is possible to spray the first washer fluid W1 to the fourth washer fluid W4 (see FIG. 2) on both the forward path side and the backward path side of the blade rubber 32 (see FIG. 2).

Therefore, during the reciprocating wiping of the blade rubber 32, it is possible to prevent a shortage of the washer fluid W on both the forward path side and the backward path side.

Specifically, the washer unit 50 on the forward path side (near side in the figure) and the washer unit 50 on the backward path side (far side in the figure) both have the same structure. However, the washer unit 50 on the forward path side and the washer unit 50 on the backward path side are formed to be mirror-symmetrical to each other with the connecting member 100 interposed therebetween.

As detailed above, according to this embodiment, the wiper blade includes the connecting member 40 rotatably mounted on the wiper arm 20, the blade rubber 32 mounted on the connecting member 40 and being slidably in contact with the surface of the windshield glass 11, and the washer unit 50 mounted on the second long side wall portion 42 of the connecting member 40 in the wiping direction of the blade rubber 32, and spraying the first washer fluid W1 to the fourth washer fluid W4 toward the surface of the windshield glass 11. The washer unit 50 includes the cover member 60 disposed facing the second long side wall portion 42, the valve member 70 disposed between the second long side wall portion 42 and the cover member 60, and the first flow path FP1 to the fourth flow path FP4 which are disposed between the cover member 60 and the valve member 70 and through which the first washer fluid W1 to the fourth washer fluid W4 flow. The valve member 70 includes the hollow check valve 72 that is disposed on the upstream side of the first flow path FP1 to the fourth flow path FP4 and is elastically deformable. The check valve 72 has the slit SL, and the slit SL is opened against the restoring force of the check valve 72 when the internal pressure P1 of the check valve 72 increases, and is closed by the restoring force of the check valve 72 when the internal pressure P1 of the check valve 72 decreases.

Thus, while the check valve 72 has a check valve structure with a simple shape that does not include a valve body or coil spring for opening and closing the flow path, it is possible to quickly spray the first washer fluid W1 to the fourth washer fluid W4 from the first spray hole H1 to the fourth spray hole H4 toward the surface of the windshield glass 11. Therefore, it is possible to improve the assembly workability of the wiper blade 30 and achieve miniaturization of the washer unit 50.

In addition, according to this embodiment, the valve member 70 includes the valve body 71 which is disposed between the second long side wall portion 42 and the cover member 60, and in which the check valve 72 is integrally provided. The slit SL provided in the check valve 72 is openable and closable between the second long side wall portion 42 and the cover member 60, and the hardness of the check valve 72 is lower than the hardness of the valve body 71 (see the modified example in FIG. 17A and FIG. 17B).

Thus, it is possible to easily open the valve body 72b, and avoid placing a large load on the washer pump.

Furthermore, according to this embodiment, the slit SL is surrounded and formed by the pair of first opposing walls WL1 that face each other in the longitudinal direction of the blade rubber 32, and the pair of second opposing walls WL2 that face each other in the wiping direction of the blade rubber 32. The thickness t1 of the first opposing walls WL1 along the longitudinal direction of the blade rubber 32 is thicker than the thickness t2 of the second opposing walls WL2 along the wiping direction of the blade rubber 32.

Thereby, the valve body 72b can have a so-called duckbill valve structure with a simple shape that can be opened in the wiping direction of the blade rubber 32 in response to increased internal pressure.

Furthermore, according to this embodiment, the structure of the check valve 72 can be simplified to improve the assembly workability thereof and achieve miniaturization of the washer unit 50. Therefore, it is possible to suppress an increase in manufacturing energy, and ultimately, to achieve particularly Goal 7 (Ensure access to affordable, reliable, sustainable and modern energy for all) and Goal 13 (Take urgent action to combat climate change and its impacts) of the Sustainable Development Goals (SDGs) established by the United Nations.

It goes without saying that the disclosure is not limited to the above-described embodiment, and various modifications can be made within the scope that does not deviate from its essence. For example, although the above embodiment illustrates that there are a total of four spray holes, first spray hole H1 to fourth spray hole H4, the disclosure is not limited thereto, and the total number of spray holes can be set to three or less, or five or more.

Additionally, in the above embodiment, as shown in FIG. 6, only the part where the first groove G1 of the cover member 60 is disposed, that is, the part of the cover member side second surface CF2, is inclined at a predetermined angle with respect to the longitudinal direction of the cover body 61, and as shown in FIG. 7A to FIG. 7C, only the part covering the first groove G1 of the valve body 71, that is, the part where the valve member side second surface BF2 is disposed, is inclined to match the inclination of the cover member side second surface CF2.

The disclosure is not limited thereto, and it is possible to incline only the part where the fourth groove G4 of the cover member 60 is disposed, or to incline both parts where the first groove G1 and the fourth groove G4 of the cover member 60 are disposed, or to extend both parts where the first groove G1 and the fourth groove G4 of the cover member 60 are disposed straight along the longitudinal direction of the cover body 61. In this case, on the valve body 71 side, the shape is also changed so as to cover the parts where the first groove G1 and the fourth groove G4 are disposed.

Furthermore, in the above embodiment, as shown in FIG. 10, the assembly is performed in the procedure of: first, abutting the cover member 60 and the valve member 70 against each other (refer to the dashed arrow M1); second, mounting the nozzle assembly NA on the connecting member 40 (refer to the dashed arrow M2); and third, mounting the piping connection member 80 on the cover member 60 (refer to the dashed arrow M3).

The disclosure is not limited thereto, and for example, the assembly can also be performed in the procedure of: first, abutting the cover member 60 and the valve member 70 against each other; second, mounting the piping connection member 80 on the cover member 60; and third, mounting the nozzle assembly NA with the piping connection member 80 installed on the connecting member 40.

Further, although the above embodiment shows that the wiper blade 30 is used for vehicles such as automobiles, the disclosure is not limited thereto, and can be used, for example, for aircraft, railway vehicles, construction machinery, etc.

In addition, the material, shape, dimensions, number, installation location, etc. of each component in the above embodiment are arbitrary as long as they can achieve the disclosure, and are not limited to the above embodiment.

### Reference Signs List

10: Wiper device, 11: Windshield glass, 20: Wiper arm, 21: Arm head, 21a: Drive shaft fixing portion, 21b: First piping connection member, 21c: Shank connecting portion, 22: Arm shank, 22a: Head connecting portion, 22b: Piece fixing portion, 23: Arm piece, 23a: U-shaped hook, 23b: Holding member, 30: Wiper blade, 31: Rubber holder, 32: Blade rubber, 32a: Blade body, 32b: Lip portion, 32c: Neck portion, 32d: Groove, 34: Holder, 35: Vertebra, 36: Cap, 40: Connecting member, 41: First long side wall portion, 42: Second long side wall portion (side wall portion), 43: First bridging portion, 44: Second bridging portion, 45: Third bridging portion, 46: First claw portion, 47: Second claw portion, 48: Elastic arm portion, 48a: Engagement protrusion, 49: Washer unit mounting portion, 49a: Guide rail, 49b: Abutment portion, 49c: Claw groove, 49d: Hooking portion, 50: Washer unit, 60: Cover member (first mounting member), 61: Cover body, 61a: Engagement portion, 61b: Tip protrusion, 61c: Engagement claw portion, 62: Piping connection member fixing portion, 62a: Arc-shaped recess, 62b: First fixing claw, 62c: Second fixing claw, 70: Valve member (second mounting member), 71: Valve body (body portion), 72: Check valve, 72a: Base portion, 72b: Valve body, 80: Piping connection member, 81: Piping connection body, 81a: Front side surface, 81b: First hooking recess, 81c: Second hooking recess, 81d: Back side surface, 81e: Insertion portion, 82: Tube connection portion, 82a: Flange portion, 83: Rotation fixing portion, 90: Valve member (second mounting member), 100: Connecting member, BF1: Valve member side first surface, BF2: Valve member side second surface, CF1: Cover member side first surface, CF2: Cover member side second surface, CL: Clip member, FP1 to FP4: First flow path to fourth flow path (flow path), G1 to G4: First groove to fourth groove, H1 to H4: First spray hole to fourth spray hole, HL: Mounting hole, NA: Nozzle assembly, OP: Opening, P1: Internal pressure, P2: External pressure, PN: Connecting pin, PR: Protrusion, PS: Flow passage, RM: Valve chamber, SH: Drive shaft, SL: Slit, SP: Tension spring, TB: Second washer tube, TP: Tapered surface, TP1: Opening side tapered portion, TP2: Insertion portion side tapered portion, W: Washer fluid (cleaning fluid), W1 to W4: First washer fluid to fourth washer fluid (cleaning fluid), WL1: First opposing wall, WL2: Second opposing wall

## Claims

1. A wiper blade (30), mounted on a wiper arm (20) oscillated by a drive shaft (SH) and wiping a wiping surface, the wiper blade comprising:
a connecting member (40) rotatably mounted on the wiper arm;
a blade rubber (32) mounted on the connecting member and being slidably in contact with the wiping surface; and
a washer unit (50) mounted on a side wall portion (42) on at least one side of the connecting member in a wiping direction of the blade rubber, and spraying a cleaning fluid toward the wiping surface,
wherein the washer unit comprises:
a first mounting member (60) disposed facing the side wall portion;
a second mounting member (70) disposed between the side wall portion and the first mounting member; and
a flow path (FP1, FP2, FP3, FP4) which is disposed between the first mounting member and the second mounting member and through which the cleaning fluid flows, wherein
the second mounting member comprises a check valve (72) which is disposed on an upstream side of the flow path, and which is hollow and elastically deformable,
the check valve has a slit (SL), and
the slit is opened against a restoring force of the check valve when an internal pressure of the check valve increases, and is closed by the restoring force of the check valve when the internal pressure of the check valve decreases.

2. The wiper blade according to claim 1, wherein the second mounting member comprises a body portion (71) which is disposed between the side wall portion and the first mounting member and in which the check valve is integrally provided,
the slit provided in the check valve is openable and closable between the side wall portion and the first mounting member, and
a hardness of the check valve is lower than a hardness of the body portion.

3. The wiper blade according to claim 1 or claim 2, wherein the slit is surrounded and formed by:
a pair of first opposing walls (WL1) facing each other in a longitudinal direction of the blade rubber; and
a pair of second opposing walls (WL2) facing each other in the wiping direction of the blade rubber, and
a thickness of the first opposing walls along the longitudinal direction of the blade rubber is thicker than a thickness of the second opposing walls along the wiping direction of the blade rubber.
